# EUROPEAN PATENT APPLICATION

(11) **EP 1 749 649 A2**
(43) Date of publication of application: **07.02.2007**
(21) Application number: 06118405.7
(22) Date of filing: 03.08.2006
(51) Int. Cl.: B29D 30/30, B29D 30/16, B29C 47/12

(54) **A method for forming an elastomeric component**

(30) Priority: 04.08.2005 US 705425 P; 04.08.2005 US 705407 P
(71) Applicant: THE GOODYEAR TIRE & RUBBER COMPANY, Akron, Ohio 44316-0001 (US)
(72) Inventor: Koch, Brian Richard, Hartville, OH 44632 (US); Burg, Gary Robert, Massillon, OH 44646 (US); Ackerman, Scott Edward, Brunswick, OH 44212 (US); Dyrlund, Christopher David, Canton, OH 44705 (US)
(74) Representative: Kutsch, Bernd

(57) **Abstract**

A method for forming an elastomeric component such as a tire component is disclosed. The method has the steps of extruding a strip of elastomeric material onto a surface (A), and shaping the strip of elastomeric material to a predetermined profile by compressing the strip of material between a shaping die and the surface (A), the shaping die being connected to a damping device (320). Also a nozzle (150) applicator usable to practice said method is described.

## Description

### Technical Field

This invention relates to a method for forming elastomeric components such as tire components and to a nozzle applicator usable to perform this method.

### Background of the Invention

It is well known in the prior art to manufacture tire components from elastomeric sheets of rubber which are then cut to length and lapped or butt spliced onto a cylindrically shaped building drum. The tire building drum is then expanded radially in the center and the ends are drawn in axially to shape the tire into a torus. Belts of cord-reinforced layers and a strip of tread rubber are applied over the crown of the green carcass to form a "green" or unvulcanized tire assembly. The finished tire assembly is then placed into a tire mold and cured in a process called vulcanization to make a tire.

Since the tire components are assembled flat onto a cylindrical tire building drum and then expanded into a toroidal shape, each component has to be placed in tension or compression prior to being molded. This stretching of the various parts causes slippage between the various rubber parts as the components heat up during vulcanization. Attempts to minimize the slippage of the various parts have been attempted. Another disadvantage is that the tire has components which are spliced, and which contribute to tire nonuniformity.

Tire manufacturers have been increasingly focusing their efforts on eliminating tire nonuniformities. More recently, tire manufacturers are making tire components from a continuous strip of unvulcanized rubber. A thin, narrow strip of unvulcanized rubber is circumferentially wound multiple times onto a rotating drum or toroid shaped core, wherein the strips are successively layered or stacked in order to form the desired shape of the tire component. See for example, US-B- 6,372,070 and US-B- 4,963,207. The strip of rubber is typically extruded directly onto a tire building drum or toroidal-shaped core using an extruding device. Alternatively the strips may be formed from calendering and then conveyed to the tire drum or core.

This strip lamination method of forming tire components has the advantage of eliminating splices because the annular tire component is typically formed of one continuous strip. Strip lamination has the further advantage of allowing flexibility in manufacturing, since the tire component profile may be changed from tire to tire. However, there are several disadvantages to strip lamination. First, trapped air or air pockets may be formed in between the strips, creating gaps in the finished tire component. A second disadvantage to the strip lamination is that the contour of the tire component is an approximation due to the stacking of the strips which have a fixed geometrical shape. Further as a result of the stacking, the outer surfaces of the tire component are not smooth. The component contour typically has staggered top and bottom surfaces which can cause surface defects commonly referred to as "lights" or discolorations. A third disadvantage is that the strips need to be stitched to the drum or core using a pressure roller or stitcher, and the rubber tends to stick to the roller. A further disadvantage is that since the component is formed from multiple strips, it is only an approximation of the desired shape.

### Brief Description of the Drawings

The invention will be described by way of example and with reference to the accompanying drawings in which:
Figure 1 is a side perspective view of a rubber applicator apparatus usable to practice the present invention.
Figure 2 is a rear perspective view of the rubber applicator apparatus of Figure 1;
Figure 3 is a side view of a portion of the apparatus of Figure 1, shown together with a tire building drum, in phantom.
Figure 4 is a front view of the rubber applicator apparatus of Figure 1;
Figure 5 is a cross sectional view of the rubber applicator apparatus taken in the direction 5-5 of Figure 4;
Figure 6 is a perspective view of a nozzle;
Figure 7 is a cross sectional view of the nozzle of Figure 6 in the direction 7-7.
Figure 8 is a side view of a tongue assembly.
Figure 9 is a front view of the tongue assembly.
Figure 10 is a side view of the tongue assembly.
Figure 11 is a rear view of the tongue assembly.
Figure 12 is a top view of the tongue assembly.
Figure 13 is a side view of the rubber applicator apparatus and tongue assembly shown applying rubber to a tire building drum.
Figures 14-16 illustrate perspective views of alternate nozzle assemblies.

### Summary of the Invention

The invention relates to a method according to claim 1 and an apparatus according to claim 8. Dependent claims cover preferred embodiments of the invention.

### Detailed Description of the Invention

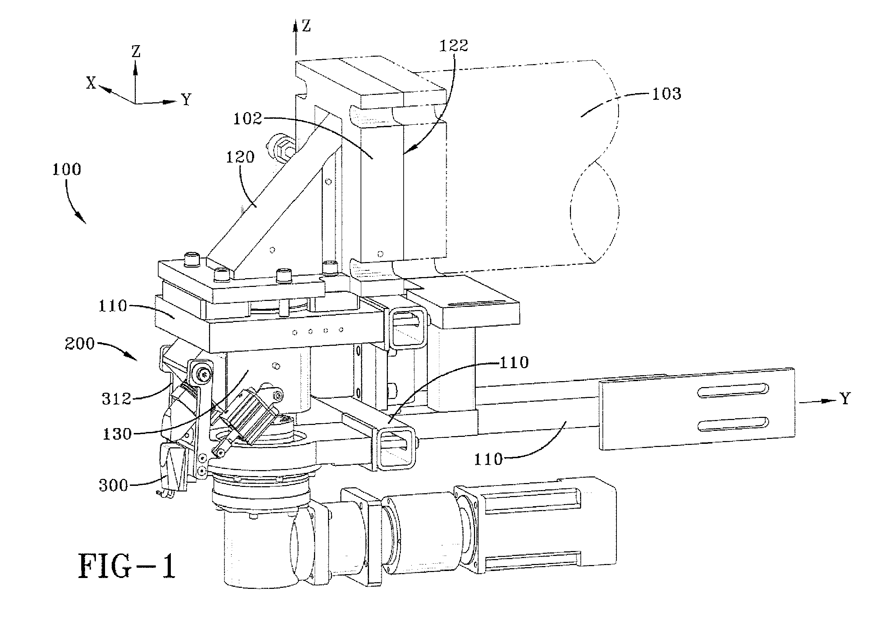

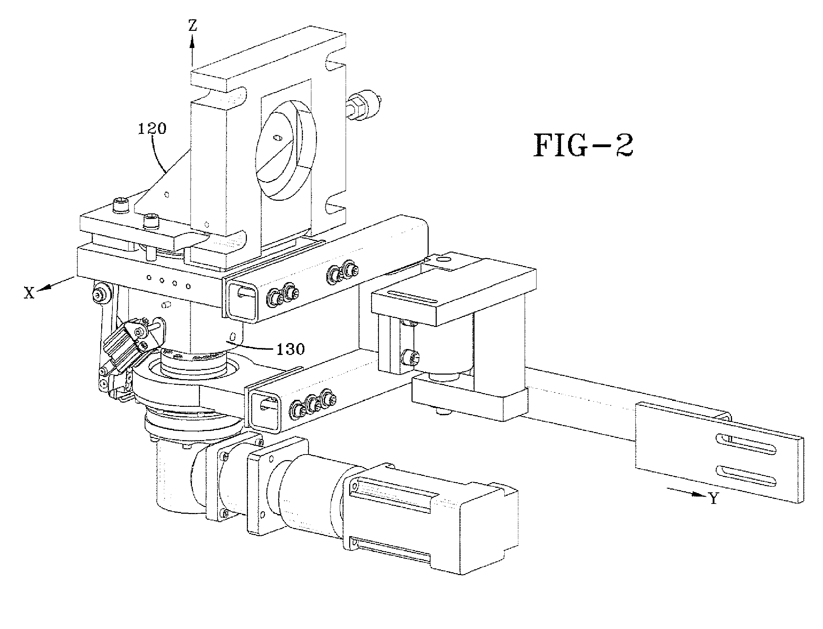

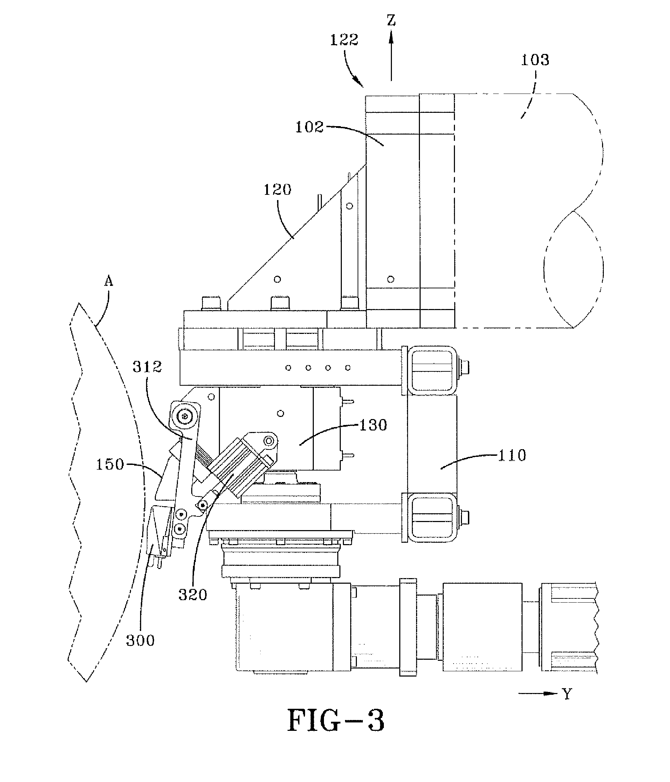

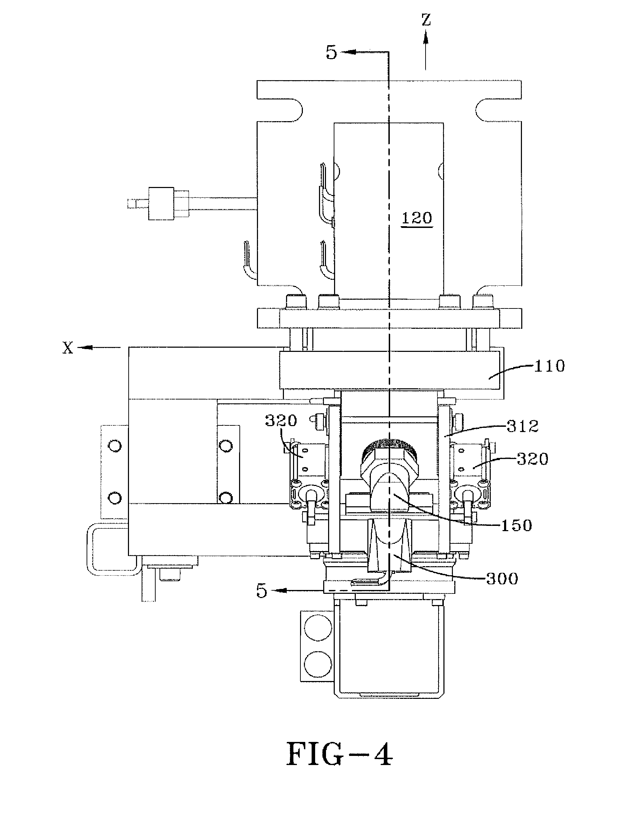

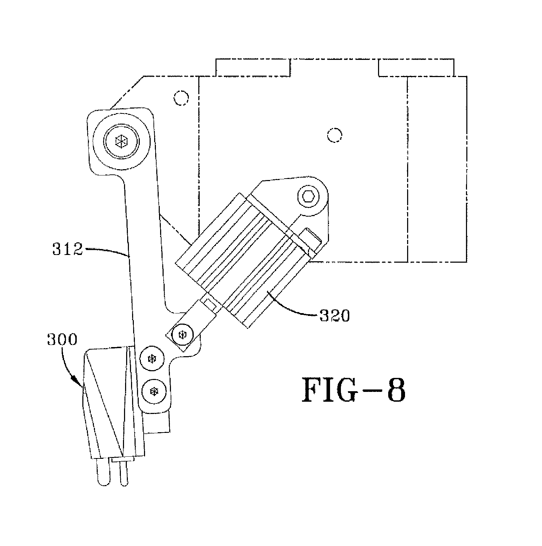

A first embodiment of a rubber applicator apparatus 100 is shown in Figures 1-13. The applicator apparatus 100 provides a novel method and apparatus to form elastomeric components such as tire components quickly and efficiently. The apparatus 100 permits the tire components to be quickly and efficiently formed from a single continuous wound strip or multiple strips of unvulcanized rubber. A continuous strip or strips of unvulcanized rubber may be applied directly onto a tire building surface such as a tire building drum A or an other toroidal shaped core (not shown).

As shown in Figure 1, the applicator apparatus 100 includes a support frame 110 (parts of which have been removed for clarity), and a rubber applicator subassembly 200. The support frame may further include support rails for translating the entire applicator apparatus in the X, Y and Z direction (not shown).

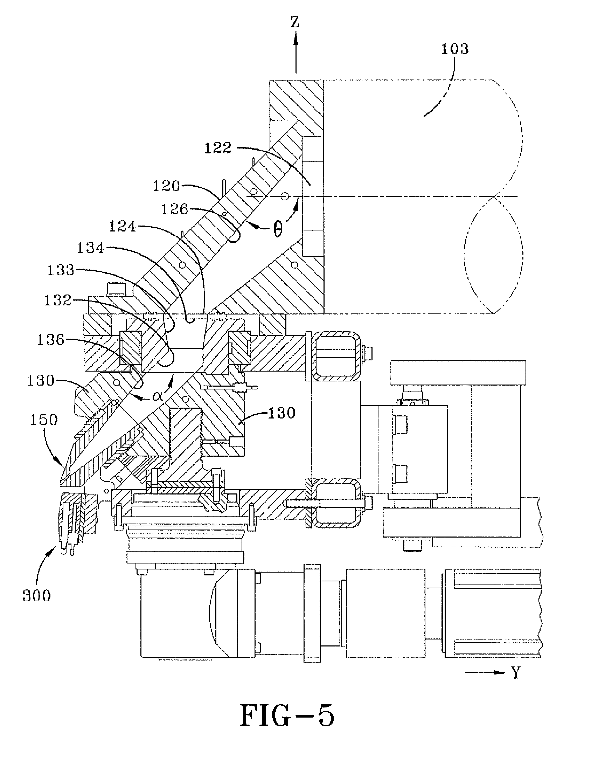

The applicator apparatus 100 has a mounting flange 102 for connecting to a rubber pumping means 103 such as an extruder, gear pump, gear pump-extruder, or rubber injector (not shown). An extruder suitable for use with the invention is made by VMI AZ Formen und Maschienenbau of Munich, Germany. The rubber or elastomer output from the rubber pumping means is fed into a transition member 120. As best shown in figure 5, transition member 120 has an interior channel 126 having an inlet end 122 and an outlet end 124. The inlet end 122 preferably has a larger area than the outlet end 124, resulting in a decreasing area or a funnel-shaped channel 126. Channel 126 is also angled downwardly (angle θ), wherein q is in the range of 120 to 165 degrees with respect to the Y axis, more typically 135- 150 degrees. The outlet end 124 of the transition member 120 is connected to a rotatably mounted applicator head 130 which rotates about the Z axis. The applicator head can rotate in the range of about, 360 degrees, or more typically+/- 150 degrees from the center position.

The rotatable applicator head 130 further comprises an internal channel 132 which is fluid communication with the funnel shaped channel 126. The channel 132 has a first portion 133 which is substantially aligned with the axis of rotation of the applicator head 130, i.e., the Z axis. The rubber or elastomer flow from the extruder to the inlet end 122 of the transition member is primarily oriented in the Y direction. Thus, the rubber or elastomer material flowing within the interior channels 126, 132 changes from flowing predominantly along the Y axis, transitioning to flow substantially in a second direction parallel to the axis of rotation, for example along the Z axis prior to entering the rotatable applicator inlet 134. Because the rubber material changes direction prior to entering the rotatable applicator head, the flow remains unaffected by the rotation of the applicator head. Since rubber or elastomers have memory, changing direction of the rubber material prior to rotation prevents the material from curling or otherwise having an undesirable non-uniform flow.

Applicator channel 132 further comprises a second portion 136 having a decreasing area towards the applicator nozzle. The applicator channel 132 is also angled, forming an angle α in the range of 120-150 degrees with respect to the Y axis, more typically 135 degrees. The use of two angled channels 126, 136 instead of one steeply angled channel (90 degrees) results in less flow resistance, resulting in a more efficient system. Still further, the use of decreasing area channels further contributes to the efficiency of the system, requiring less energy to push the rubber flow out of the system.

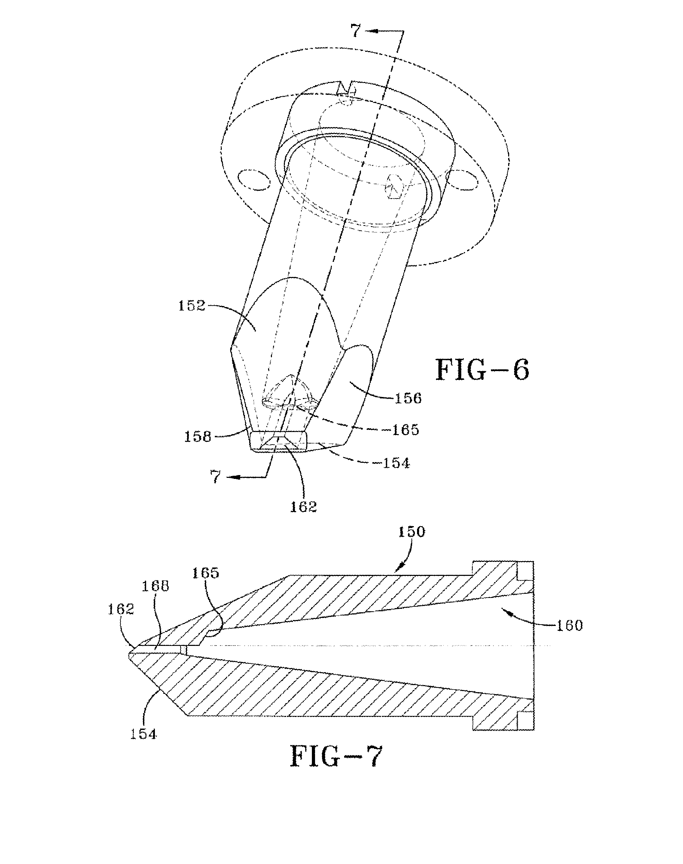

The outlet end of the applicator channel is in fluid communication with the inlet of a nozzle 150. The nozzle 150, as best shown in Figures 6-7, has an outer generally cylindrical profile with one or more angled faces 152, 154, 156, 158. However, other nozzle configurations may also be used with the invention, as described in more detail, below. The interior channel 160 has a decreasing area towards the outlet orifice 162 of the nozzle. The nozzle channel 160 preferably has a length/diameter ratio in the range of 2-15, preferably 5-7, and more preferably 6-7. The nozzle channel may optionally include a flow restrictor 165 in the form of an angled edge transverse to the direction of flow. The flow restrictor is preferably located in the center of the interior of the nozzle and functions to decrease the velocity of the flow of rubber located in the center of the nozzle increasing the velocity of the rubber at the outermost portions of the nozzle. This feature helps reduce the swell of the rubber. The interior channel 160 after the flow restrictor reduces to a short tube 168. The outlet orifice 162 of the nozzle is shown with a trapezoidal shape, however other configurations may be used such as square, rectangular, triangular, etc. The width of the rubber strip output from the nozzle orifice is typically about 15 mm in width, but may vary in the range of 5 mm to 30 mm. The nozzle 150 may be optionally heated to a temperature in the range of 0 to about 230 degrees F, preferably in the range of 0 to 200 degrees F, using external or internal heaters (not shown).

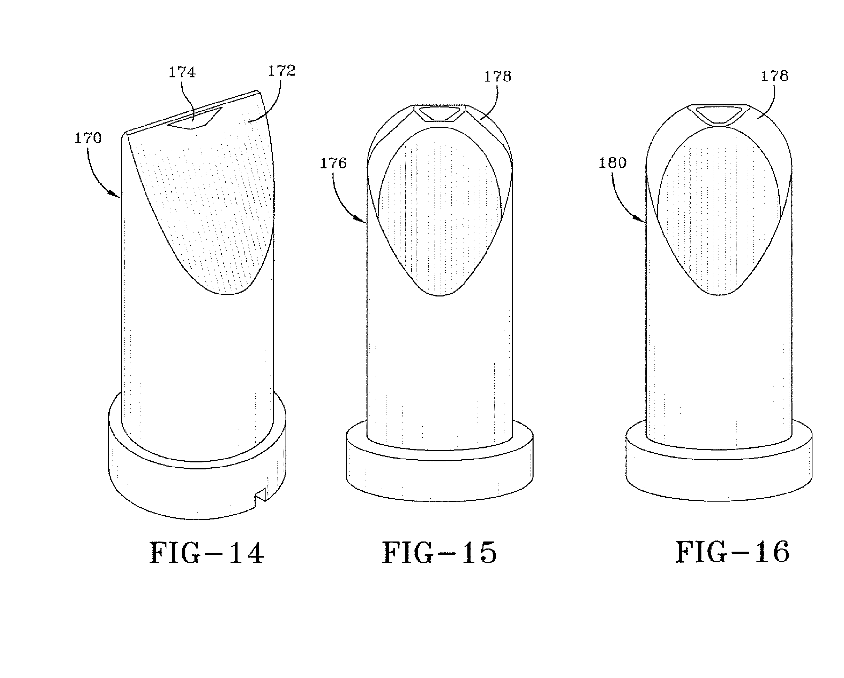

The nozzle may also have other external configurations, such as shown for example in Figures 14-16. Figure 14 illustrates a generally cylindrical nozzle 170 having a beveled edge 172 and a trapezoidal shaped orifice 174. Figures 15 and 16 illustrate nozzles 176, 180 which are similar in shape to the nozzle of Figure 14, except that the side ends 178 have been radiused.

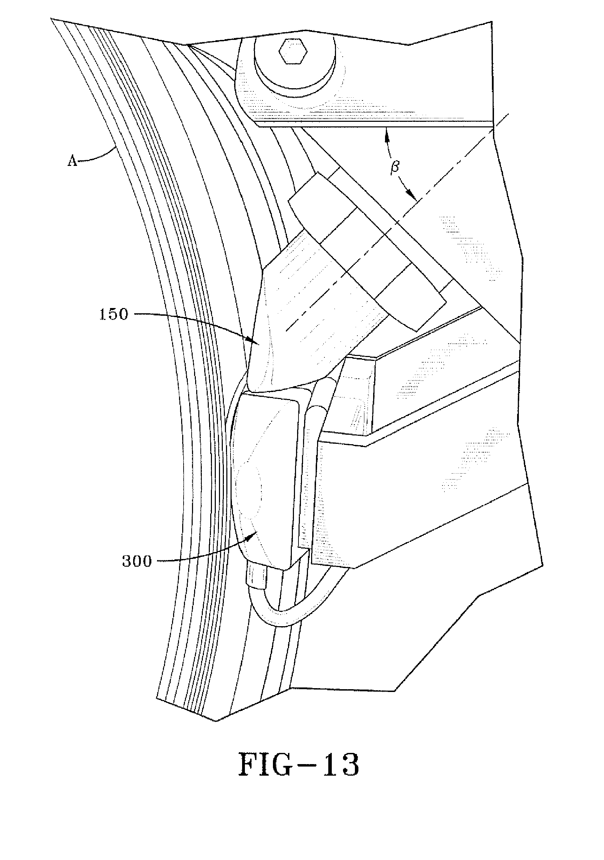

As shown in Figure 13, the nozzle 150 is oriented with respect to the tire building drum A core (not shown), or an other tire building drum surface or tire application surface, typically at an angle β in the range of 0 to 90 degrees, alternatively in the range of 35-90 degrees. It is preferred that the rubber output from the nozzle be oriented about 90 degrees relative to the application surface.

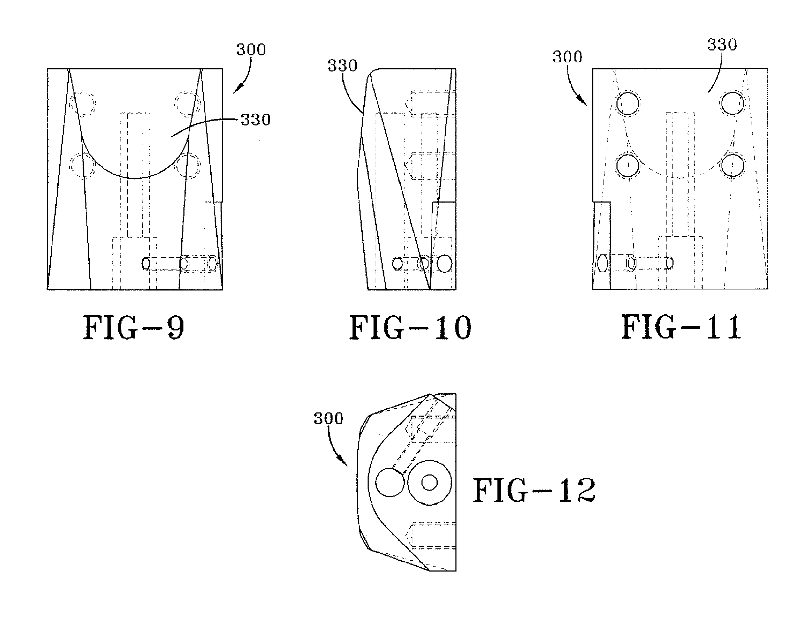

Adjacent the nozzle is an optional tongue assembly 300. The tongue assembly 300 is rotatably mounted to a frame having forked ends 312 which are rotatably mounted to the applicator apparatus 100. Also mounted to the tongue support frame 310 are dual hydraulic or pneumatic cylinders 320 which press the tongue into engagement with the applicator surface as well as providing a shock absorbing or damping function. The tongue could also be spring mounted onto the support frame. The cylinders allow the tongue to "float" over the drum, which is important due to the drum runout or uneven surface. The tongue engagement pressure is variable and may range from 0 to 100 psi, preferably 20 to 70 psi. The tongue 300 as shown in Figures 9-12, has a generally outer convex surface 303 with rounded edges and a beveled lip 330 which engages the applicator surface. The tongue 300 may also comprise additional shapes such as flat surface, convex or radiused outer surface or a concave surface.

The tongue assembly preferably has internal heaters for heating the outer surface in the range of 200 to 400 degrees F, and more preferably in the range of 350 to 400 degrees F. Thus the tongue functions as a hot knife, smoothing and smearing the freshly deposited rubber, melting and blending the adjacent strips of rubber together, into a homogeneous mass. The higher tongue temperature does not impact the curing of rubber due to the short residence time of the tongue on the rubber. The tongue assembly also performs a stitcher function due to the pressure of the tongue against the drum, smoothing out the air pockets. The outer surface of the tongue also helps shape the formed component.

The following steps describe the formation of a tire component such as a sidewall, chafer, liner, or other elastomeric article. Rubber or elastomer is fed to a pumping means, such as an injector, gear pump, extruder or combination thereof. The extrudate then enters the applicator head 100. In the applicator head, the elastomeric material is fed through a first stationary channel, a transition channel and then a second channel. The first channel is stationary, while the transition channel and the second channel are contained within the rotatable head. Each channel has a decreasing area from the inlet end to the outlet end and is angled downwardly, taking advantage of gravity. In between the first and second channels is a short vertical transition channel. In the short transition channel the extrudate flows vertically. The advantage to this configuration is that the rotatable head can pivot without affecting the fluid dynamics of the rubber. The flow exits the second channel and enters a nozzle. The nozzle has a decreasing area and a flow restrictor. The nozzle is oriented at an angle with respect to a tire building surface or core. The nozzle assembly is capable of translating in three directions in discrete index positions in order to accurately apply the rubber to the building surface. The support surface can be is a toroid shaped core or a cylindrical shaped tire building drum, or any other desired shape. The primary advantage of applying the strip to a toroidally shaped surface is the finished part is accurately positioned in a green uncured state at the proper orientation to be molded without requiring any change in orientation from the condition in which the strip was initially formed.

The extrudate exits the nozzle in a strip form, having the desired shape of the exit orifice of the nozzle. If a drum or toroid is used as an applicator surface, as the drum or core rotates, a continuous annular strip may be formed. The nozzle can be indexed axially so to form the desired shape of the component. The nozzle can be controlled by a control system wherein the movement of the nozzle so that the multiple layers of strip dictates the shape of the desired tire component.

A tongue which is preferably heated may be located adjacent the nozzle. The tongue is rotatable mounted near the nozzle to a frame. The tongue assembly may also be connected to a damping device such as a pneumatic or hydraulic cylinder which dampens the movement of the tongue in response to the drum variation in diameter (drum runout). The tongue assembly is preferably heated to a temperature so that the tongue heats adjacent strips of rubber, while smoothing and compressing the strips in order to form a solid monolithic mass.

The profile of each formed component can be varied in a fashion such that the cross-sectional thickness is very thin as in the tip of an apex or thick near the bead core. Also the entire profile can be thin as in a liner component. The nozzle and/or tongue assembly can articulate moving in numerous directions the numerous degrees of freedom enabling the nozzle/tongue assembly to form flat, convex or concave curvatures as the material is spread. In addition, the numerous degrees of freedom allow the components such as a sidewall to be built. What is important to note is some or all of these tire components can be formed using this technique of the present invention. The tire manufacturer simply can choose which components can be most efficiently produced using this technique.

## Claims

1. A method of forming an elastomeric component, particularly an elastomeric tire component, comprising the steps of :
extruding a strip of elastomeric material onto a surface;
shaping the strip of elastomeric material to a predetermined profile by compressing the strip of material between a shaping die and the surface, the shaping die being connected to a damping device.

2. The method of claim 1 wherein the elastomeric material is compressed and heated simultaneously by said shaping die, wherein the shaping die is heated to a temperature in the range of 149°C to 177°C (300-350 degrees F).

3. The method of claim 1 or 2 further comprising the step of applying the strip of elastomeric material to a rotating drum.

4. The method of at least one of the preceding claims further comprising the step of rotating the surface about an axis of rotation as the strip is applied to form the strip annularly and substantially perpendicular to the axis.

5. The method of at least one of the preceding claims further comprising the step of:
extruding a second strip of elastomeric material annularly overlapping at least a portion of the first strip and the surface;
shaping the second strip of elastomeric material to a predetermined cross-sectional profile by compressing the second strip of material between a shaping die and the overlapped first strip and the surface.

6. The method of at least one of the preceding claims wherein the elastomeric material is extruded through a nozzle (150, 170, 180) onto the surface.

7. The method of at least one of the preceding claims, wherein the step of extruding the first and/or second strip of elastomeric material onto the surface includes spirally applying multiple passes of the strip of elastomeric material onto the surface.

8. A nozzle applicator for applying an elastomeric material to a surface, the nozzle comprising: a nozzle and a first and second channel, wherein the first channel has a decreasing area and a length/diameter ratio in the range of 2-15, wherein the second channel is in fluid communication with the first channel, and wherein the second channel has a flow restrictor (165) therein.

9. The nozzle applicator of claim 8 having a length/diameter ratio of 6-7.

10. The nozzle applicator of claim 8 or 9 further comprising a tongue (300) rotatably mounted to said nozzle (150).
